(19) Europäisches Patentamt
European Patent Office
Office européen des brevets

(11) **EP 1 438 220 B1**

(12) **EUROPÄISCHE PATENTSCHRIFT**

(45) Veröffentlichungstag und Bekanntmachung des Hinweises auf die Patenterteilung:
**22.09.2010 Patentblatt 2010/38**

(21) Anmeldenummer: **02776783.9**

(22) Anmeldetag: **07.10.2002**

(51) Int Cl.:
***B60T 8/40*** (2006.01)   ***B60T 13/66*** (2006.01)

(86) Internationale Anmeldenummer:
**PCT/DE2002/003755**

(87) Internationale Veröffentlichungsnummer:
**WO 2003/031244 (17.04.2003 Gazette 2003/16)**

(54) **PUMPENANSTEUERUNG IN EINER ELEKTROHYDRAULISCHEN BREMSANLAGE**

PUMP CONTROL SYSTEM IN AN ELECTROHYDRAULIC BRAKING SYSTEM

AMOR AGE DE POMPE DANS UN SYSTEME DE FREINAGE ELECTROHYDRAULIQUE

(84) Benannte Vertragsstaaten:
**AT BE BG CH CY CZ DE DK EE ES FI FR GB GR IE IT LI LU MC NL PT SE SK TR**

(30) Priorität: **05.10.2001 DE 10149242**
**09.04.2002 DE 10215392**

(43) Veröffentlichungstag der Anmeldung:
**21.07.2004 Patentblatt 2004/30**

(73) Patentinhaber: **ROBERT BOSCH GMBH**
**70442 Stuttgart (DE)**

(72) Erfinder:
• **HACHTEL, Juergen**
**74219 Moeckmuehl (DE)**
• **ADAMSKI, Dirk**
**71063 Sindelfingen (DE)**
• **WOLL, Peter**
**76646 Bruchsal (DE)**

(56) Entgegenhaltungen:
**EP-A- 0 469 615    DE-A- 19 807 749**
**US-A- 4 402 554    US-A- 6 155 653**

## Beschreibung

Die Erfindung bezieht sich auf ein Verfahren zur Ansteuerung einer Speicherladepumpe in einer elektrohydraulischen Bremsanlage eines Fahrzeugs nach dem Oberbegriff des Anspruches 1.

In der Druckschrift DE 195 48 248 A1 ist ein derartiges Verfahren offenbart. In dem elektrohydraulischen Bremssystem wird die Bremsanforderung des Fahrers sensorisch erfasst und in einen zugeordneten Bremsdruck umgerechnet, welcher über eine Speicherladepumpe zur Befüllung eines Druckspeichers im Bremssystem erzeugt wird. Von dem Druckspeicher wird Bremsflüssigkeit mit dem geforderten Bremsdruck zu den Radbremsanlagen des Fahrzeuges geleitet. Durch Betätigen der Speicherladepumpe kann ein ausreichend hoher, der Fahreranforderung entsprechender Speicherdruck sichergestellt werden. Um ein möglichst geräuschloses Laden des Druckspeichers durch die Speicherladepumpe zu ermöglichen, wird gemäß der DE 195 48 248 A1 die Pumpe einer Rechteckfunktion folgend in einzelnen, zeitlich abgesetzten und aufeinander folgenden Pulsen bestromt, wobei die Leistung der Speicherladepumpe durch das Verhältnis zwischen Pulsdauer und Pausendauer zwischen zwei aufeinander folgenden Pulsen bestimmt wird.

Durch die Vielzahl aufeinander folgender Steuerpulse wird die Speicherladepumpe verhältnismäßig stark belastet, da jeder Puls mit einem Pumpenanlauf verbunden ist. Hierdurch kann die Lebensdauer der Speicherladepumpe beeinträchtigt werden. Das häufige Ein- und Ausschalten der Pumpe kann außerdem zu einer Geräuschbelastung führen.

Ein elektrohydraulisches Bremssystem ist auch in der Druckschrift DE 199 14 400 A1 offenbart. Zur Überwachung eines ausreichend hohen Drucks im Druckspeicher des Bremssystems wird aus dem Bremspedalweg, dem Hauptbremszylinderdruck und der Fahrzeuggeschwindigkeit ein Radsolldruck ermittelt, mit welchem der Radbremszylinder zu beaufschlagen ist. Dieser Radsolldruck wird mit dem vorhandenen Speicherdruck im Druckspeicher verglichen, wobei der Speicherdruck gegebenenfalls auf einen Wert angehoben wird, welcher die Bereitstellung des geforderten Radsolldruckes ermöglicht. Bei diesem Bremssystem wird der Speicherdruck bei Unterschreitung des Radsolldruckes erhöht, welcher auf eine Anforderung des Fahrers zurückgeht. Bei einer hohen Anzahl an Fahreranforderungen, beispielsweise bei längeren Bergabfahrten, muss auch mit einer entsprechend hohen Anzahl an Ladevorgängen im Druckspeicher gerechnet werden.

Die DE 199 35 371 A1 beschreibt ein elektrohydraulisches Bremssystem, bei dem der Geräuschpegel der Speicherladepumpe für den Druckspeicher mit dem Geräuschpegel sonstiger Fahrzeugkomponenten, Umgebungsgeräuschen und Innenraumgeräuschen im Fahrzeug verglichen wird. Die Speicherladepumpe soll zur Geräuschreduzierung nur für den Fall betätigt werden, dass der Geräuschpegel der Pumpe von den Pegeln der sonstigen, im Fahrzeug bzw. der Umgebung auftretenden Geräuschen zumindest teilweise überlagert wird. Hierbei ist jedoch zu beachten, dass die Betätigung der Speicherladepumpe in Abhängigkeit von dem Geräuschpegel nur ein nachgeordnetes Kriterium darstellt, welches nur für den Fall beachtlich ist, dass im Druckspeicher ein ausreichend hoher Speicherdruck herrscht. Andernfalls muss ungeachtet des aktuellen Geräuschpegels die Speicherladepumpe zur Erhöhung des Drucks betätigt werden.

Die den Oberbegriff der unabhängigen Ansprüche bildende EP 0469 615 A zeigt eine Ansteuerung einer Speicherladepumpe in einer Bremsanlage eines Fahrzeugs, bei der die Speicherladepumpe zur Befüllung eines Druckspeichers aktiviert wird, wenn der Druck im Druckspeicher einen vorgebbaren Einschaltschwellenwert erreicht oder unterschreitet. Die Ansteuerung der Pumpe geschieht dabei derart, dass Druckspeicherinnendruck innerhalb eines vorbestimmten Bereichs gehalten wird, wobei der Bereich in Abhängigkeit von der erfassten Fahrzeuggeschwindigkeit verändert wird.

Die US 4,402,554 A zeigt ebenfalls eine Pumpenansteuerung, bei der eine Erhöhung des Einschaltschwellenwertes der Pumpe bei Einsatz einer Antiblockierregelung stattfindet.

Der Erfindung liegt das Problem zugrunde, das Laden des Druck-speichers in einer elektrohydraulischen Bremsanlage eines Fahrzeugs pumpenschonend und geräuschmindernd durchzuführen.

Dieses Problem wird erfindungsgemäß mit den Merkmalen des Anspruches 1 gelöst. Die Unteransprüche geben zweckmäßige Weiterbildungen an.

Bei dem erfindungsgemäßen Verfahren wird die Speicherladepumpe zur Befüllung des Druckspeichers für den Fall aktiviert, dass der Druck im Druckspeicher einen Einschaltschwellenwert erreicht oder unterschreitet, wobei der Einschaltschwellenwert kein fester, unveränderlicher Wert ist, sondern vielmehr während des Fahrbetriebs in Abhängigkeit von aktuellen, veränderlichen Zustands- oder Betriebsgrößen bzw. Kenngrößen des Fahrzeugs variabel eingestellt wird. Durch den variablen Einschaltschwellenwert wird die Anzahl der Pumpenanläufe deutlich verringert. Eine die Pumpe belastende, parameterabhängige Ansteuerung der Pumpe zur Leistungsanpassung ist daher nicht notwendig. Erfindungsgemäß ist nämlich der Einschaltschwellenwert parameterabhängig und wird an die veränderlichen Betriebszustände des Fahrzeugs angepasst. Durch diesen situationsbedingten Betrieb der Pumpe ergibt sich neben einer Geräuschminderung auch eine verlängerte Lebensdauer des Pumpenmotors.

Erfindungsgemäß wird in einer ersten Erfindungsvariante als Einflussgröße auf den Einschaltschwellenwert die Reibarbeit für die Bestimmung des Einschaltschwellenwertes herangezogen, welche während eines Bremsvorganges an wenigstens einer der Radbremseinrichtungen der Bremsanlage geleistet wird. Bei der Reibarbeit handelt es sich um eine sich während der Bremsung ändernden Betriebsgröße des Fahrzeuges, welche zu einer Erwärmung der Bremseinrichtungen und damit einhergehendem Nachlassen der Bremswirkung (Fading) führt. Über die Berücksichtigung der Reibarbeit kann das Fading zumindest teilweise kompensiert werden.

In einer zweiten Erfindungsvariante wird als Einflussgröße für die Bestimmung des Einschaltschwellenwertes die Temperatur im Druckspeicher berücksichtigt werden. Außerdem kann es zweckmäßig sein, bei ungebremsten Fahrzeugen den Einschaltschwellenwert um einen vorgebbaren Offsetwert gegenüber dem gebremsten Zustand zu erhöhen, wodurch ein schnellerer Aufbau an Bremskraft zu erreichen ist.

Der Einschaltschwellenwert kann flexibel entsprechend dem aktuellen Fahrzeugzustand eingestellt werden. In zweckmäßiger Weiterbildung ist vorgesehen, dass der Einschaltschwellenwert zwischen einem unteren Wert und einem oberen Wert veränderbar ist, wobei insbesondere der untere Einschaltschwellenwert, gegebenenfalls zusätzlich oder alternativ auch der obere Einschaltschwellenwert als Funktion definierter Zustands- oder Betriebsgrößen des Fahrzeuges darstellbar ist. In bevorzugter Weiterbildung ist hierbei vorgesehen, dass für die Zustands- oder Betriebsgrößen untere und obere Grenzwerte festgelegt werden und der untere Einschaltschwellenwert im Bereich zwischen dem unteren Grenzwert und dem oberen Grenzwert interpoliert wird. Über die Grenzwerte können einzelne Bereiche mit unterschiedlichem Ansprechverhalten der Speicherladepumpe definiert werden, wobei insbesondere auch eine Kombination von Einschaltschwellenwertanteilen für unterschiedliche Zustands- oder Betriebsgrößen des Fahrzeuges berücksichtigt werden können. So hat es sich als zweckmäßig erwiesen, als Zustandsgröße, über die der Einschaltschwellenwert zu beeinflussen ist, die Fahrzeuggeschwindigkeit heranzuziehen und einen unteren Geschwindigkeitsgrenzwert und einen oberen Geschwindigkeitsgrenzwert festzulegen, wobei unterhalb des unteren Geschwindigkeitsgrenzwertes der entsprechende Anteil am unteren Eingangsschwellenwert vorteilhaft Null ist und oberhalb des oberen Geschwindigkeitsgrenzwertes der Anteil am unteren Einschaltschwellenwert auf einen maximalen Wert begrenzt wird. Im zwischenliegenden Bereich zwischen dem unteren und dem oberen Grenzwert wird der Wert des unteren Einschaltschwellenwertes interpoliert, insbesondere linear interpoliert, wobei gegebenenfalls auch eine nicht lineare Interpolation in Frage kommt.

Als weitere Einflussgrößen für die Bestimmung des Einschaltschwellenwertes kann der Vorspanndruck im Druckspeicher berücksichtigt werden.

Weitere Vorteile und zweckmäßige Ausführungen sind den weiteren Ansprüchen, der Figurenbeschreibung und den Zeichnungen zu entnehmen. Es zeigen:

Fig. 1    ein Blockdiagramm mit einer elektrohydraulischen Bremsanlage eines Fahrzeuges, die zur Durchführung des erfindungsgemäßen Verfahrens geeignet ist,

Fig. 2    ein Schaubild mit der zeitabhängigen Darstellung des Speicherdrucks, welcher in einem Wertebereich zwischen einem unteren Einschaltschwellenwert und einem oberen Ausschaltschwellenwert verläuft,

Fig. 3    der untere Einschaltschwellenwert, der obere Ein- schaltschwellenwert sowie der Ausschaltschwellenwert als Funktion der Temperatur,

Fig. 4    der Reibarbeitsanteil am unteren Einschaltschwellen- wert als Funktion der Reibarbeit,

Fig. 5    der Geschwindigkeitsanteil am unteren Einschalt- schwellenwert als Funktion der Fahrzeuggeschwindig- keit.

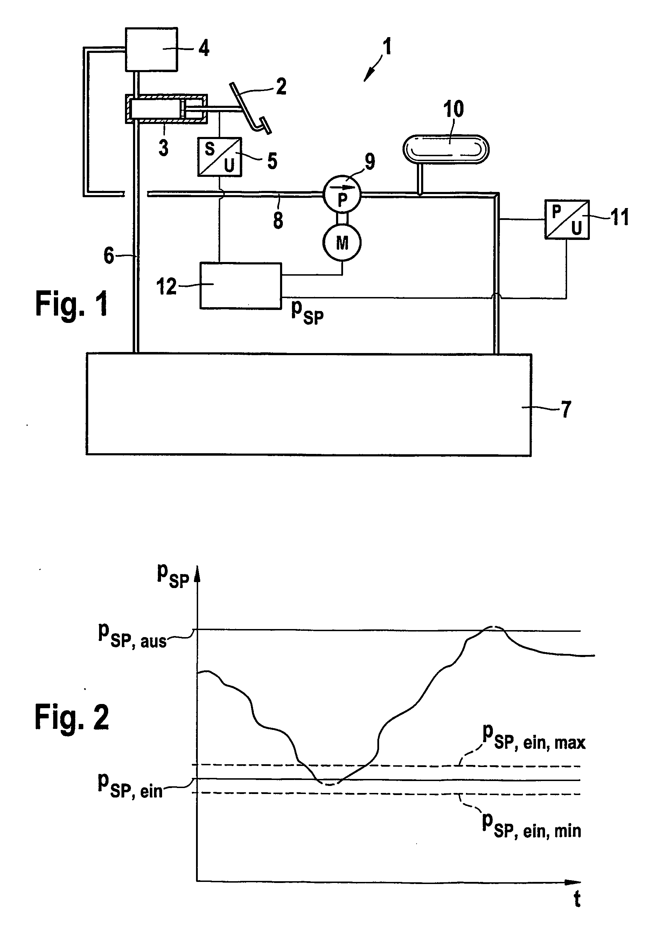

Die in Fig. 1 dargestellte elektrohydraulische Bremsanlage 1 in einem Kraftfahrzeug umfasst ein vom Fahrer zu betätigendes Bremspedal 2, bei dessen Betätigung in einem Hauptbremszylinder 3 Druck aufgebaut wird. Der Hauptbremszylinder 3 ist mit einem Hydraulikreservoir 4 verbunden und bezieht über dieses Reservoir Hydraulikfluid. Der Stellweg des Bremspedals 2 wird über einen Pedalwegsensor 5 gemessen und einer Steuer- und/oder Regelungseinrichtung 12 zur weiteren Verarbeitung und Ansteuerung der Komponenten der Bremsanlage zugeführt. Hauptbremszylinder 3 und Hydraulikreservoir-4 kommunizieren über eine Hydraulikleitung 6 mit einer Radbremseinheit 7, welche insbesondere mehrere, jeweils einem Rad des Fahrzeugs zugeordnete Radbremseinrichtungen umfasst. Des Weiteren ist zwischen Hydraulikreservoir 4 und der Radbremseinheit 7 eine zweite Hydraulikleitung 8 vorgesehen, in der sich ein Druckspeicher 10 befindet, der über eine Speicherladepumpe 9 mit unter Druck stehendem Hydraulikfluid zu befüllen ist. Der Druck im Druckspeicher 10 kann über einen Drucksensor 11 ermittelt werden, dessen Sensorwerte ebenfalls der Regel- und/oder Steuerungseinrichtung zuzuführen sind.

Bei einem ordnungsgemäßen Betrieb der Bremsanlage dient die Hydraulikleitung 8 als Zulaufleitung für die Zufuhr von unter Druck stehendem Hydraulikfluid zu der Radbremseinheit 7, wohingegen die Hydraulikleitung 6 als Rücklaufleitung für den Rücklauf des Hydraulikfluids in das Hydraulikreservoir 4 dient. Bei einer Betätigung des Bremspedales 2 wird der Stellweg des Bremspedals über den Pedalwegsensor 5 ermittelt. Aus dem Stellweg des Bremspedals wird auf einen angeforderten Bremsdruck geschlossen, der über eine Aktivierung der Speicherladepumpe 9 im Druckspeicher 10 aufgebaut wird. Die Aktivierung und Deaktivierung der Speicherladepumpe 9 folgt unter Berücksichtigung des aktuellen, über den Drucksensor 11 zu ermittelnden Speicherdrucks $p_{SP}$ im Druckspeicher 10, indem der Elektromotor der Speicherladepumpe 9 ein- bzw. ausgeschaltet wird. Die Kriterien für die Einschaltung und Ausschaltung der Speicherladepumpe 9 werden an Hand der folgenden Figuren beschrieben. Das Hydraulikfluid in der Radbremseinheit 7 wird nach erfolgter Radbremsung über die Hydraulikleitung 6 in das Hydraulikreservoir 4 zurückgeführt.

Im Falle einer Fehlfunktion der Bremsanlage 1 - insbesondere bei einem Ausfall der Speicherladepumpe 9 - wird der im Hauptbremszylinder 3 erzeugte Bremsdruck über die Hydraulikleitung 6 unmittelbar auf die Radbremseinheit 7 geleitet, so dass auch bei einem Ausfall einer oder mehrerer elektrischer Komponenten der Radbremsanlage eine ausreichende Bremsverzögerung erreicht werden kann.

Fig. 2 zeigt einen exemplarischen Verlauf des Speicherdrucks $p_{SP}$ zwischen einem Einschaltschwellenwert $p_{SP,ein}$ und einem Ausschaltschwellenwert $p_{SP,aus}$ in Abhängigkeit von der Zeit t. Der Einschaltschwellenwert $p_{SP,ein}$ und der Ausschaltschwellenwert $p_{SP,aus}$ stellen eine untere bzw. obere Grenzlinie dar, zwischen denen der tatsächliche Speicherdruck $p_{SP}$ liegt und die vom Speicherdruck nicht unter-'bzw. überschritten werden dürfen. Falls der Speicherdruck den Einschaltschwellenwert $p_{SP,ein}$ erreicht oder unterschreitet, wird die Speicherladepumpe im System aktiviert und der Speicherdruck $p_{SP}$ wieder erhöht. Falls der Speicherdruck den Ausschaltschwellenwert $p_{SP,aus}$ erreicht oder überschreitet, wird die Speicherladepumpe deaktiviert. Der Einschaltschwellenwert $p_{SP,ein}$ und der Ausschaltschwellenwert $p_{SP,aus}$ sind keine festen Größen, sondern werden im Fahrbetrieb des Fahrzeugs in Abhängigkeit von aktuellen Fahrzeugzustandsgrößen bzw. Fahrzeugbetriebsgrößen bestimmt. Insbesondere der Einschaltschwellenwert $p_{SP,ein}$ kann hierbei zwischen einer unteren Grenze - einem unteren Einschaltschwellenwert $p_{SP,ein,min}$ - und einer oberen Grenze - einem oberen Einschaltschwellenwert $p_{SP,ein,max}$ - verändert werden, wobei auch diese Grenzen vorteilhaft nicht unveränderlich, sondern als Funktion von Zustands- und Betriebsgrößen zu bestimmen sind. Gegebenenfalls ist auch der Ausschaltschwellenwert $p_{SP,aus}$ zwischen zwei veränderlichen Grenzen als Funktion von Zustands- und Betriebsgrößen zu variieren.

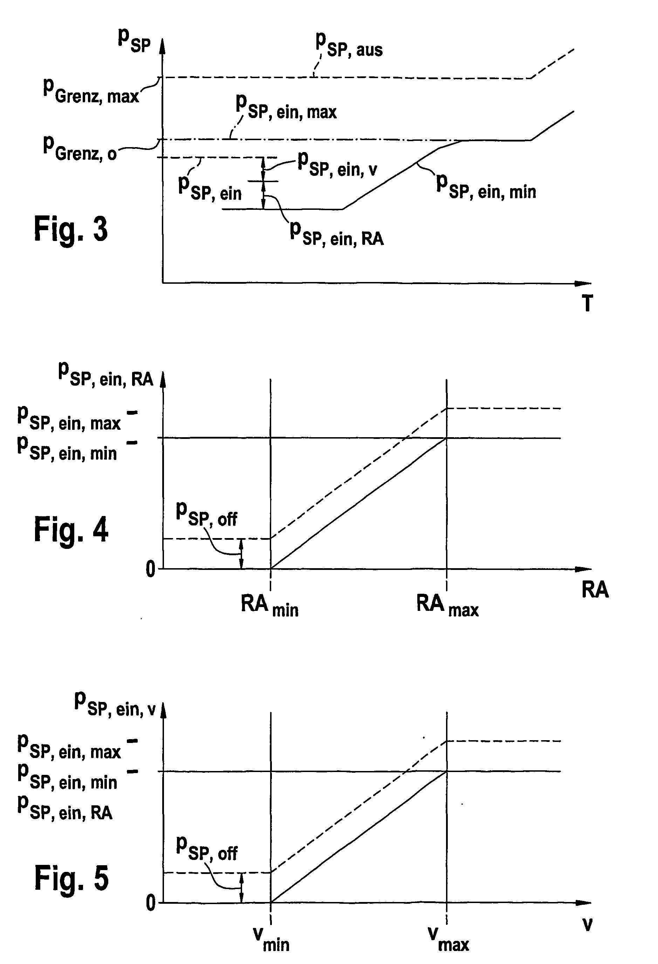

In Fig. 3 sind die Grenzlinien für den Speicherdruck $p_{SP}$ in Abhängigkeit von der Temperatur T dargestellt. Eingetragen sind drei Kurvenverläufe: der Verlauf für den unteren Einschaltschwellenwert $p_{SP,ein,min}$, der Verlauf für den oberen Einschaltschwellenwert $p_{SP,ein,max}$ und der Verlauf für den Ausschaltschwellenwert $p_{SP,aus}$. Der Bereich zwischen dem unteren Einschaltschwellenwert $p_{SP,ein,min}$ und dem oberen Einschaltschwellenwert $p_{SP,ein,max}$ kennzeichnet zulässige Wertebereiche für den tatsächlichen Einschaltschwellenwert $p_{SP,ein}$; wird der Einschaltschwellenwert $p_{SP,ein}$ unterschritten, so wird - wie in Fig. 1 und 2 beschrieben - die Speicherladepumpe zur Erhöhung des Speicherdrucks $p_{SP}$ aktiviert. Der tatsächliche Einschaltschwellenwert $p_{SP,ein}$ wird in Abhängigkeit von aktuellen Zustands- und Betriebsgrößen des Fahrzeugs, insbesondere in Abhängigkeit von der Fahrzeuggeschwindigkeit v und der Reibarbeit RA wenigstens einer Radbremseinrichtung der Bremsanlage bestimmt. Der Ausschaltschwellenwert $p_{SP,aus}$ wird vorteilhaft als Funktion des Einschaltschwellenwerts $p_{SP,ein}$ bestimmt.

Der Einschaltschwellenwert $p_{SP,ein}$ liegt zwischen den Kurven für den unteren Einschaltschwellenwert $p_{SP,ein,min}$ und dem oberen Einschaltschwellenwert $p_{SP,ein,max}$ und setzt sich additiv aus einem dem unteren Einschaltschwellenwert $p_{SP,ein,min}$ entsprechenden Anteil und zwei weiteren Anteilen $p_{SP,ein,RA}$ und $p_{SP,ein,v}$ zusammen, die der Reibarbeit an den Radbremseinrichtungen und der Fahrzeuggeschwindigkeit zugeordnet sind. Rechnerisch lässt sich der tatsächliche Einschaltschwellenwert $p_{SP,ein}$ als Minimumfunktion von oberem Einschaltschwellenwert $p_{SP,ein,max}$ und Summe der Einzelanteile $P_{SP,ein,min}$, $P_{SP,ein,RA}$ und $P_{SP,ein,v}$ darstellen:

$$p_{SP,ein} = MIN\{p_{SP,ein,max}, \ p_{SP,ein,min} + p_{SP,ein,RA} + p_{SP,ein,v}\} \ ,$$

wobei jedoch zu berücksichtigen ist, dass dieser Zusammenhang nur unter der Voraussetzung gilt, dass der untere Einschaltschwellenwert $p_{SP,ein,min}$ kleiner ist als ein oberer Druckgrenzwert $p_{Grenz,o}$, der beispielsweise den Wert 137 bar einnehmen kann. Für den Fall, dass der untere Einschaltschwellenwert $P_{SP,ein,min}$ größer gleich ist als der obere Druckgrenzwert $p_{Grenz,o}$, wird der Einschaltschwellenwert $p_{SP,ein}$ auf den oberen Druckgrenzwert $p_{Grenz,o}$ gesetzt:

$$p_{SP,ein} = p_{SP,ein,min} .$$

Im Falle eines Fading der Radbremsen wird der Einschaltschwellenwert $p_{SP,ein}$ auf einen maximalen Grenzwert $p_{Grenz,max}$ gesetzt, der höher liegt als der obere Druckgrenzwert $p_{Grenz,o}$ und beispielsweise den Wert 160 bar einnehmen kann:

$$p_{SP,ein} = p_{Grenz,max} \cdot$$

Der untere Einschaltschwellenwert $p_{SP,ein,min}$ kann als Funktion eines Reservedruckes $p_{Reserv}$ bestimmt werden, der denjenigen Speicherdruck bezeichnet, bei dem eine definierte Volumenreserve im Druckspeicher gewährleistet ist, beispielsweise 40 cm$^3$:

$$p_{SP,ein,min} = MIN\{p_{Grenz,o}, MAX(p_{Grenz,u}, p_{Reserv})\}$$

Gemäß dieser Beziehung, die nur für den Fall gilt, dass der Reservedruck $p_{Reserv}$ kleiner ist als der obere Druckgrenzwert $p_{Grenz,o}$, wird der untere Einschaltschwellenwert $p_{SP,ein,min}$ als Minimumfunktion aus oberem Druckgrenzwert $p_{Grenz,o}$ und Maximumfunktion aus einem unteren Druckgrenzwert $p_{Grenz,u}$ und Reservedruck $p_{Reserv}$ bestimmt. Der untere Druckgrenzwert $p_{Grenz,u}$ beträgt beispielsweise 125 bar.

Für den Fall, dass der Reservedruck $p_{Reserv}$ größer gleich ist als der obere Druckgrenzwert $p_{Grenz,o}$, berechnet sich der untere Einschaltschwellenwert $p_{SP,ein,min}$ nach der Beziehung

$$p_{SP,ein,min} = MIN\{p_{Grenz,max}, MAX(p_{Grenz,o}, p_{Reserv}-p_{Rest})\}$$

in Abhängigkeit des maximalen Grenzwerts $p_{Grenz,max}$, des oberen Druckgrenzwerts $p_{Grenz,o}$, des Reservedrucks $p_{Reserv}$ und eines vom Reservedruck zu subtrahierenden Restdrucks $p_{Rest}$, der beispielsweise den Wert 14 bar einnehmen kann.

Der Reservedruck $p_{Reserv}$ wird als Funktion des Gesamtvolumens $V_{Ges}$ des Druckspeichers, eines Reservevolumens $V_{Reserv}$ und eines Vorspanndrucks $p_{VSF}$ im Druckspeicher gemäß der Beziehung

$$p_{Reserv} = p_{VSP} * \frac{V_{Ges}}{V_{Ges} - V_{Reserv}}$$

ermittelt, wobei der Vorspanndruck $p_{VSP}$ aus den Werten bei Raumtemperatur nach der Funktion

$$p_{VSP} = p_{VSP,RT} * \frac{T_{SP}}{T_{RT}}$$

zu ermitteln ist. Hierin bedeuten $p_{VSF,RT}$ der Vorspanndruck bei Raumtemperatur, der je nach Alterungszustand des Druckspeichers zwischen maximal 95 bar (neuer Druckspeicher) und mindestens 75 bar (alter Druckspeicher) liegt. Desweiteren ist mit $T_{RT}$ die Raumtemperatur bezeichnet. $T_{SP}$ bedeutet die Speichertemperatur, die in Abhängigkeit der Steuergerätetemperatur $T_{SG}$ ermittelt wird und für den Fall, dass die Steuergerätetemperatur $T_{SG}$ kleiner gleich einer Grenztemperatur $T_{Grenz}$ ist, die insbesondere 393 K beträgt, auf die Steuergerätetemperatur $T_{SG}$, andernfalls auf die Grenztemperatur $T_{Grenz}$ gesetzt wird. Das Gesamtvolumen $V_{Ges}$ des Druckspeichers kann den gerätetypischen Wert 200 cm$^3$ einnehmen und das Reservevolumen $V_{Reserv}$ = 40 cm$^3$ betragen.

Der obere Einschaltschwellenwert $p_{SP,ein,max}$, wird zweckmäßig auf einen konstanten Wert gesetzt, der insbesondere dem oberen Druckgrenzwert $p_{Grenz,o}$ entspricht:

$$p_{SP,ein,max} = p_{Grenz,o} \cdot$$

Fig. 4 zeigt den Reibarbeitsanteil $p_{SP,ein,RA}$ für den Einschaltschwellenwert $p_{SF,ein}$ in Abhängigkeit von der aktuell geleisteten Reibarbeit RA an einer oder an mehreren Radbremseinrichtungen der Bremsanlage. Unterhalb eines vorgebbaren unteren Reibarbeitsgrenzwerts $RA_{min}$, der beispielsweise 15000 J betragen kann, beträgt der Reibarbeitsanteil $p_{SP,ein,RA}$ Null. Zwischen dem unteren Reibarbeitsgrenzwert $RA_{min}$ und einem vorgebbaren oberen Reibarbeitsgrenzwert $RA_{max}$ - beispielsweise 25000 J - wird der Reibarbeitsanteil $p_{SP,ein,RA}$ als lineare Funktion der Reibarbeit RA gemäß der Beziehung

$$p_{SP,ein,RA} = \frac{RA - RA_{min}}{RA_{max} - RA_{min}} * (p_{SP,ein,max} - p_{SP,ein,min})$$

in Abhängigkeit des unteren und des oberen Reibarbeitsgrenzwerts $RA_{min}$, $RA_{max}$ und des unteren und des oberen Einschaltschwellenwerts $p_{SP,ein,min}$, $p_{SP,ein,max}$ ermittelt. Oberhalb des oberen Reibarbeitsgrenzwerts $RA_{max}$ berechnet sich der Reibarbeitsanteil $p_{SP,ein,RA}$ aus der Differenz von unterem und oberem Einschaltschwellenwert $p_{SP,ein,min}$, $P_{SP,ein,max}$:

$$p_{SP,ein,RA} = p_{SP,ein,max} - p_{SP,ein,min} \cdot$$

Es kann zweckmäßig sein, den Reibarbeitsanteil $p_{SP,ein,RA}$ im Falle eines ungebremsten Fahrzeugs um einen Druck-Offsetwert $p_{SP,Off}$ zu erhöhen, der beispielsweise 8 bar beträgt. Auf diese Erhöhung kann im Falle eines gebremsten Fahrzeugs verzichtet werden.

Alternativ zu den Grenzwerten in physikalischen Einheiten können auch normierte, dimensionslose Grenzwerte Verwendung finden.

Fig. 5 zeigt den Geschwindigkeitsanteil $p_{SP,ein,v}$ für den Einschaltschwellenwert $p_{SP,ein}$ in Abhängigkeit von der Fahrzeuggeschwindigkeit v. Die Berechnung des Geschwindigkeitsanteils $p_{SP,ein,v}$ läuft in Analogie zu der Ermittlung des Reibarbeitsanteil $p_{SP,ein,RA}$ in Abhängigkeit eines unteren Geschwindigkeitsgrenzwerts $v_{min}$ und eines oberen Geschwindigkeitsgrenzwerts $v_{max}$ ab, jedoch unter Berücksichtigung des Reibarbeitsanteil $p_{SP,ein,RA}$. Unterhalb des unteren Geschwindigkeitsgrenzwerts $v_{min}$ liegt der Geschwindigkeitsanteil $p_{SP,ein,v}$ bei Null. Zwischen dem unteren Geschwindigkeitsgrenzwert $v_{min}$ und dem oberen Geschwindigkeitsgrenzwert $v_{max}$ berechnet sich der Geschwindigkeitsanteil $p_{SP,ein,v}$ als lineare Funktion der Fahrzeuggeschwindigkeit v gemäß der Beziehung

$$p_{SP,ein,v} = \frac{v - v_{min}}{v_{max} - v_{min}} * (p_{SP,ein,max} - p_{SP,ein,min} - p_{SP,ein,RA})$$

in Abhängigkeit des unteren und des oberen Geschwindigkeitsgrenzwerts $v_{min}$ und $v_{max}$ und des unteren und des oberen Einschaltschwellenwerts $P_{SP,ein,min}$, $p_{SP,ein,max}$ ermittelt. Zusätzlich fließt auch der Reibarbeitsanteil $p_{SP,ein,RA}$, der vom maximal erreichbaren Niveau des Geschwindigkeitsanteils $p_{SP,ein,v}$ subtrahiert wird, in die Berechnung ein.

Oberhalb des oberen Geschwindigkeitsgrenzwerts $v_{max}$ wird der Geschwindigkeitsanteil $p_{SP,ein,v}$ auf

$$p_{SP,ein,v} = p_{SP,ein,max} - p_{SP,ein,min} - p_{SP,ein,RA}$$

begrenzt.

Bei einem ungebremsten Fahrzeugs kann das Druckniveau wiederum um den Druck-Offsetwert $p_{SP,Off}$ erhöht werden.

Der Ausschaltschwellenwert $p_{SP,ein,aus}$ wird in Abhängigkeit des Einschaltschwellenwerts $p_{SP,ein}$, aus dem Maximum von maximalem Druckgrenzwerts $p_{Grenz,max}$ und einem zweiten Wert bestimmt, der aus dem Minimum von einem Ausschaltschwellen-Maximum $p_{aus,max}$ und Einschaltschwellenwert $p_{SP,ein}$ plus einem Ausschalt-Offset $p_{aus,Off}$ berechnet wird:

$$p_{SP,aus} = MAX\{p_{Grenz,max}, \; MIN(p_{aus,max}, \; p_{SP,ein} + p_{aus,Off})\} \; .$$

Typische Werte für das Ausschaltschwellen-Maximum $p_{aus,max}$ liegen bei 180 bar, für den Ausschalt-Offset bei $p_{aus,OFF}$ = 23 bar.

**Patentansprüche**

1. Verfahren zur Ansteuerung einer Speicherladepumpe in einer elektrohydraulischen Bremsanlage eines Fahrzeugs, wobei die Speicherladepumpe zur Befüllung eines Druckspeichers aktiviert wird, wenn der Druck ($p_{SP}$) im Druckspeicher einen vorgebbaren Einschaltschwellenwert ($P_{SP,ein}$) erreicht oder unterschreitet, wobei der Einschaltschwellenwert ($P_{SP,ein}$) während des Fahrbetriebs in Abhängigkeit von aktuellen Zustands- oder Betriebsgrößen des Fahrzeugs variabel eingestellt wird, **dadurch gekennzeichnet, dass** der Einschaltschwellenwert ($P_{SP,ein}$)

   - in Abhängigkeit von der geleisteten Reibarbeit (RA) während eines Bremsvorganges an wenigstens einer Radbremseinrichtung der Bremsanlage und/oder
   - in Abhängigkeit von der Temperatur ($T_{SP}$) im Druckspeicher

   bestimmt wird.

2. Verfahren nach Anspruch 1,
   **dadurch gekennzeichnet,**
   **dass** der Einschaltschwellenwert ($p_{SP,ein}$) zwischen einem unteren Einschaltschwellenwert ($p_{SP,ein,min}$) und einem oberen Einschaltschwellenwert ($p_{SP,ein,max}$) veränderbar ist, wobei der untere Einschaltschwellenwert ($p_{SP,ein,min}$) als Funktion definierter Zustands- oder Betriebsgrößen des Fahrzeugs darstellbar ist.

3. Verfahren nach Anspruch 2,
   **dadurch gekennzeichnet,**
   **dass** für definierte Zustands- oder Betriebsgrößen des Fahrzeugs untere.und obere Grenzwerte festgelegt werden, wobei der untere Einschaltschwellenwert ($p_{SP,ein,min}$) im Bereich zwischen dem unteren Grenzwert ($RA_{min}$, $v_{min}$) und dem oberen Grenzwert ($RA_{max}$, $v_{max}$) interpoliert wird.

4. Verfahren nach Anspruch 2 und 3,
   **dadurch gekennzeichnet,**
   **dass** der untere Einschaltschwellenwert ($p_{SP,ein,min}$) in einem Bereich zwischen einem unteren Reibarbeitsgrenzwert ($RA_{min}$) und einem oberen Reibarbeitsgrenzwert ($RA_{max}$) linear interpoliert wird.

5. Verfahren nach einem der Ansprüche 1 bis 4,
   **dadurch gekennzeichnet,**
   **dass** der Einschaltschwellenwert ($p_{SP,ein}$) in Abhängigkeit von der Fahrzeuggeschwindigkeit (v) bestimmt wird.

6. Verfahren nach Anspruch 2, 3 und 5,
   **dadurch gekennzeichnet,**
   **dass** der untere Einschaltschwellenwert ($p_{SP,ein,min}$) in einem Bereich zwischen einem unteren Geschwindigkeitsgrenzwert ($v_{min}$) und einem oberen Geschwindigkeitsgrenzwert ($v_{max}$) linear interpoliert wird.

7. Verfahren nach einem der Ansprüche 1 bis 6,
   **dadurch gekennzeichnet,**

**dass** der Einschaltschwellenwert ($p_{SP,ein}$) in Abhängigkeit von dem Vorspanndruck ($p_{VSP}$) im Druckspeicher bestimmt wird.

**8.** Verfahren nach einem der Ansprüche 1 bis 7,
**dadurch gekennzeichnet,**
**dass** der Einschaltschwellenwert ($p_{SP,ein}$) bei ungebremstem Fahrzeug um einen vorgebbaren Offsetwert ($p_{SP,ein,Off}$) höher ist als während eines Bremsvorganges.

**9.** Verfahren nach einem der Ansprüche 1 bis 8,
**dadurch gekennzeichnet,**
**dass** die Speicherladepumpe ausgeschaltet wird, wenn der Druck im Druckspeicher einen Ausschaltschwellenwert ($p_{SP,aus}$) erreicht oder überschritten hat, wobei der Ausschaltschwellenwert ($p_{SP,aus}$) als Funktion des Einschaltschwellenwertes ($p_{SP,ein}$) bestimmt wird.

**10.** Verfahren nach Anspruch 9,
**dadurch gekennzeichnet,**
**dass** der Ausschaltschwellenwert ($p_{SP,aus}$) im Falle eines Fading-Verhaltens der Bremsanlage auf einen konstanten Maximalwert ($p_{aus,max}$) gesetzt wird.

**11.** Elektrohydraulische Bremsanlage in einem Fahrzeug, insbesondere Bremsanlage (1) zur Durchführung des Verfahrens nach einem der Ansprüche 1 bis 10, mit einer Speicherladepumpe (9) und einem von der Speicherladepumpe (9) befüllbaren Druckspeicher (10) und mit einer Regel- und/oder Steuerungseinrichtung (12) zur Ansteuerung der Speicherladepumpe (9) in Abhängigkeit von den aktuellen Fahr- und Betriebszustand repräsentierenden Steuersignalen, wobei über die Regel- und/oder Steuerungseinrichtung (12) während des Fahrbetriebs ein Einschaltschwellenwert ($P_{SP,ein}$) zum Einschalten der Speicherladepumpe (9) in Abhängigkeit von aktuellen Zustands- oder Betriebsgrößen des Fahrzeugs bestimmbar ist, **dadurch gekennzeichnet, dass** der Einschaltschwellenwert ($P_{SP,ein}$)

- in Abhängigkeit von der geleisteten Reibarbeit (RA) während eines Bremsvorganges an wenigstens einer Radbremseinrichtung der Bremsanlage und/oder
- in Abhängigkeit von der Temperatur ($T_{SP}$) im Druckspeicher

bestimmt wird.

**Claims**

**1.** Method for the activation of an accumulator charge pump in an electrohydraulic brake system of a vehicle, the accumulator charge pump being activated for filling a pressure accumulator when the pressure ($p_{SP}$) in a pressure accumulator reaches or undershoots a predeterminable cut-in threshold value ($p_{SP,on}$), the cut-in threshold value ($P_{SP,on}$) being set variably, during driving, as a function of current state or operating variables of the vehicle, **characterized in that** the cut-in threshold value ($P_{SP,on}$) is determined

- as a function of the friction work (RA) performed during a braking operation at at least one wheel-braking device of the brake system and/or
- as a function of the temperature ($T_{SP}$) in the pressure accumulator.

**2.** Method according to Claim 1, **characterized in that** the cut-in threshold value ($P_{SP,on}$) is variable between a lower cut-in threshold value ($p_{SP,on,min}$) and an upper cut-in threshold value ($p_{SP,on,max}$), the lower cut-in threshold value ($p_{SP,on,min}$) being presentable as a function of defined state or operating variables of a vehicle.

**3.** Method according to Claim 2, **characterized in that** the lower and upper limit values are stipulated for defined state or operating variables of the vehicle, the lower cut-in threshold value ($p_{SP,on,min}$) being interpolated in the range between the lower limit value ($RA_{min}$, $v_{min}$) and the upper limit value ($RA_{max}$, $V_{max}$).

**4.** Method according to Claims 2 and 3, **characterized in that** the lower cut-in threshold value ($p_{SP,on,min}$) is interpolated linearly in a range between a lower friction-work limit value ($RA_{min}$) and an upper friction-work limit value ($RA_{max}$).

**5.** Method according to one of Claims 1 to 4, **characterized in that** the cut-in threshold value ($p_{sp,on}$) is determined as a function of the vehicle speed (v).

6. Method according to Claims 2, 3 and 5, **characterized in that** the lower cut-in threshold value ($p_{sp,on,min}$) is interpolated linearly in a range between a lower speed limit value ($v_{min}$) and an upper speed limit value ($v_{max}$).

7. Method according to one of Claims 1 to 6, **characterized in that** the cut-in threshold value ($p_{SP,on}$) is determined as a function of the prestressing pressure ($p_{VSP}$) in the pressure accumulator.

8. Method according to one of Claims 1 to 7, **characterized in that** the cut-in threshold value ($p_{SP,on}$) is higher by the amount of a predeterminable offset value ($p_{SP,off}$) when the vehicle is unbraked than during a braking operation.

9. Method according to one of Claims 1 to 8, **characterized in that** the accumulator charge pump is cut out when the pressure in the pressure accumulator has reached or overshot a cut-out threshold value ($p_{SP,off}$), the cut-out threshold value ($P_{SP,off}$) being determined as a function of the cut-in threshold value ($p_{sp,on}$).

10. Method according to Claim 9, **characterized in that** the cut-out threshold value ($p_{SP,off}$) is set at a constant maximum value ($p_{off,max}$) in the event of a fading behaviour of the brake system.

11. Electrohydraulic brake system in a vehicle, in particular a brake system (1) for carrying out the method according to one of Claims 1 to 10, with an accumulator charge pump (9) and a pressure accumulator (10) fillable by the accumulator charge pump (9) and with a regulating and/or control device (12) for activating the accumulator charge pump (9) as a function of control signals representing the current driving and operating state, a cut-in threshold value ($p_{SP,on}$) for cutting in the accumulator charge pump (9) being determinable, during driving, as a function of current state or operating variables of a vehicle via the regulating and/or control device (12), **characterized in that** the cut-in threshold value ($p_{SP,on}$) is determined

- as a function of the friction work (RA) performed during a braking operation at at least one wheel-braking device of the brake system and/or
- as a function of the temperature ($T_{SP}$) in the pressure accumulator.

**Revendications**

1. Procédé pour amorcer une pompe de charge d'accumulateur dans une installation de freinage électrohydraulique d'un véhicule, la pompe de charge d'accumulateur étant activée pour remplir un accumulateur de pression quand la pression ($p_{SP}$) dans l'accumulateur de pression atteint ou est en dessous d'une valeur seuil d'enclenchement prédéfinissable ($p_{SP,ein}$), la valeur seuil d'enclenchement ($p_{SP,ein}$) étant ajustée de manière variable pendant le mode de fonctionnement en fonction de grandeurs d'état ou de fonctionnement du véhicule, **caractérisé en ce que** la valeur seuil d'enclenchement ($p_{SP,ein}$) est déterminée

- en fonction du travail de frottement fourni (RA) pendant une opération de freinage au niveau d'au moins un dispositif de frein de roue de l'installation de freinage et/ou
- en fonction de la température ($T_{SP}$) dans l'accumulateur de pression.

2. Procédé selon la revendication 1,
**caractérisé en ce que** la valeur seuil d'enclenchement ($p_{SP,ein}$) peut être variée entre une valeur seuil d'enclenchement inférieure ($p_{SP,ein,min}$) et une valeur seuil d'enclenchement supérieure ($p_{SP,ein,max}$), la valeur seuil d'enclenchement inférieure ($p_{SP,ein,min}$) pouvant être formée en tant que fonction de grandeurs d'état ou de fonctionnement définies du véhicule.

3. Procédé selon la revendication 2,
**caractérisé en ce que**
pour des valeurs d'état et de fonctionnement définies du véhicule, on peut fixer des valeurs limites inférieure et supérieure, la valeur seuil d'enclenchement inférieure ($p_{SP,ein,min}$) étant interpolée dans la plage comprise entre la valeur limite inférieure ($RA_{min}$, $v_{min}$) et la valeur limite supérieure ($RA_{max}$, $v_{max}$).

4. Procédé selon les revendications 2 et 3,
**caractérisé en ce que**

la valeur seuil d'enclenchement inférieure ($p_{SP,ein,min}$) est interpolée linéairement dans une plage comprise entre une valeur limite inférieure ($RA_{min}$) de travail de frottement et une valeur limite supérieure ($RA_{max}$) de travail de frottement.

**5.** Procédé selon l'une quelconque des revendications 1 à 4,
**caractérisé en ce que**
la valeur seuil d'enclenchement ($p_{SP,ein}$) est déterminée en fonction de la vitesse du véhicule (v).

**6.** Procédé selon les revendications 2, 3 et 5,
**caractérisé en ce que**
la valeur seuil d'enclenchement inférieure ($p_{SP,ein,min}$) est interpolée dans une plage comprise entre une valeur limite de vitesse inférieure ($v_{min}$) et une valeur limite de vitesse supérieure ($v_{max}$).

**7.** Procédé selon l'une quelconque des revendications 1 à 6,
**caractérisé en ce que**
la valeur seuil d'enclenchement ($p_{SP,ein}$) est déterminée en fonction de la pression de précontrainte ($p_{VSP}$) dans l'accumulateur de pression.

**8.** Procédé selon l'une quelconque des revendications 1 à 7,
**caractérisé en ce que**
la valeur seuil d'enclenchement ($p_{SP,ein}$) dans le cas d'un véhicule non freiné est supérieure d'une valeur de décalage prédéfinissable ($p_{SP,off}$) à la valeur pendant une opération de freinage.

**9.** Procédé selon l'une quelconque des revendications 1 à 8,
**caractérisé en ce que**
la pompe de charge d'accumulateur est déconnectée si la pression dans l'accumulateur de pression a atteint ou dépassé une valeur seuil de déconnexion ($p_{SP,aus}$), la valeur seuil de déconnexion ($p_{SP,aus}$) étant déterminée en fonction de la valeur seuil d'enclenchement ($p_{SP,ein}$).

**10.** Procédé selon la revendication 9,
**caractérisé en ce que**
la valeur seuil de déconnexion ($p_{SP,aus}$) est mise à une valeur maximale constante ($p_{aus,\,max}$) dans le cas d'un comportement d'affaiblissement de l'installation de freinage.

**11.** Installation de freinage électrohydraulique dans un véhicule, notamment installation de freinage (1) pour mettre en oeuvre le procédé selon l'une quelconque des revendications 1 à 10, comprenant une pompe de charge d'accumulateur (9) et un accumulateur de pression (10) pouvant être rempli par la pompe de charge d'accumulateur (9), et un dispositif de régulation et/ou de commande (12) pour la commande de la pompe de charge d'accumulateur (9) en fonction de signaux de commande représentant l'état de conduite et de fonctionnement actuel, une valeur seuil d'enclenchement ($p_{SP,ein}$) pour l'enclenchement de la pompe de charge d'accumulateur (9) en fonction de grandeurs d'état ou de fonctionnement actuelles du véhicule pouvant être déterminée par le biais du dispositif de régulation et/ou de commande (12) pendant le fonctionnement de conduite, **caractérisée en ce que** la valeur seuil d'enclenchement ($p_{SP,ein}$) est déterminée

- en fonction du travail de frottement fourni (RA) pendant une opération de freinage au niveau d'au moins un dispositif de frein de roue de l'installation de freinage et/ou
- en fonction de la température ($T_{SP}$) dans l'accumulateur de pression.

Fig. 1

Fig. 2

$p_{SP}$

$p_{SP, aus}$

$p_{Grenz, max}$

$p_{SP, ein, max}$

$p_{Grenz, o}$

$p_{SP, ein, v}$

$p_{SP, ein}$

$p_{SP, ein, min}$

$p_{SP, ein, RA}$

## Fig. 3

T

$p_{SP, ein, RA}$

$p_{SP, ein, max}$

$p_{SP, ein, min}$

$p_{SP, off}$

## Fig. 4

0

$RA_{min}$

$RA_{max}$

RA

$p_{SP, ein, v}$

$p_{SP, ein, max}$

$p_{SP, ein, min}$

$p_{SP, ein, RA}$

$p_{SP, off}$

## Fig. 5

0

$v_{min}$

$v_{max}$

v

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19548248 A1
- DE 19914400 A1
- DE 19935371 A1
- EP 0469615 A
- US 4402554 A